# EUROPÄISCHE PATENTANMELDUNG

(11) **EP 4 353 499 A2**
(43) Veröffentlichungstag der Anmeldung: **17.04.2024**
(21) Anmeldenummer: 23202457.0
(22) Anmeldetag: 09.10.2023
(51) Int. Cl.: B60D 1/02, B60D 1/14, B60D 1/167, B60D 1/26

(54) **ABSCHLEPPDEICHSEL**

(30) Priorität: 10.10.2022 DE 102022126196
(71) Anmelder: Krauss-Maffei Wegmann GmbH & Co. KG, 80997 München (DE)
(72) Erfinder: Lehmann, Christoph, 80997 München (DE); Kourklidis, Alexandros, 80997 München (DE)
(74) Vertreter: Feder Walter Ebert

(57) **Zusammenfassung**

Die Erfindung betrifft eine Abschleppdeichsel (10) über welche ein Anhängers an ein Zugfahrzeug ankoppelbar ist, so dass der Anhänger von dem Zugfahrzeug gezogen werden kann, wobei zwei Deichselglieder (1, 2), wobei eines der Deichselglieder (2) mit dem Anhänger und das andere Deichselglied (1) mit dem Zugfahrzeug verbindbar ist, wobei ein Verbindungselement (3) vorgesehen ist, welches die beiden Deichselglieder (1, 2) in einer Verbindungsposition (V) miteinander verbindet und welches über eine Sicherungseinrichtung (4) in der Verbindungsposition (V) gesichert ist, wobei das Verbindungselement (3) in eine die Verbindung der beiden Deichselglieder (1, 2) aufhebenden Freigabeposition (F) vorgespannt ist und wobei die Sicherung des Verbindungselements (3) durch eine Betätigung der Sicherungseinrichtung (4) aufhebbar ist, so dass das Verbindungselement (3) zur Notentkopplung des Anhängers von dem Zugfahrzeug aufgrund der Vorspannung selbsttätig in die Freigabeposition (F) überführt wird.

## Beschreibung

Die Erfindung betrifft eine Abschleppdeichsel, über welche ein Anhänger an ein Zugfahrzeug ankoppelbar ist, so dass der Anhänger von dem Zugfahrzeug abgeschleppt werden kann.

Entsprechende Abschleppdeichseln werden in der Regel eingesetzt, um eine Kraftüberragung zwischen zwei Fahrzeugen zu gewährleisten, so dass das eine Fahrzeug das andere Fahrzeug abschleppen bzw. ziehen oder schieben kann. Das abschleppende Fahrzeug wird dabei als Zugfahrzeug bezeichnet und das abgeschleppte Fahrzeug als Anhänger. Es ist möglich, dass der Anhänger keinen eigenen Antrieb aufweist und insofern auf eine Bewegung durch das Zugfahrzeug angewiesen ist. Weiterhin ist es aber auch möglich, dass sich der Anhänger eigentlich über einen Antrieb auch aus eigener Kraft bewegen kann, dieser aber gleichwohl über das Zugfahrzeug bewegt werden soll. Dies kann bspw. der Fall sein, wenn der Antrieb des Fahrzeugs defekt ist und dieses insofern von dem Zugfahrzeug abgeschleppt werden muss. Zudem kann auch vorgesehen sein, dass der Anhänger über das Zugfahrzeug zunächst an einen Einsatzort geschleppt wird und dann erst dort über einen eigenen Antrieb bewegt wird.

Um den Anhänger über das Zugfahrzeug zu bewegen, muss die Abschleppdeichsel eine Kraftübertragung zwischen dem Zugfahrzeug und dem Anhänger ermöglichen. Die Abschleppdeichsel ist dabei auf der einen Seite mit dem Anhänger verbunden und auf der anderen Seite lösbar mit dem Zugfahrzeug verbindbar. Das Zugfahrzeug weist dafür in der Regel eine genormte Schnittstelle wie bspw. eine Anhängerkupplung auf, um den Anhänger über die Abschleppdeichsel an das Zugfahrzeug anzukoppeln.

Weiterhin sind Anhänger bekannt, die sich durch die Abschleppdeichsel nur ziehen und schieben lassen und die ggf. eine eigenständige Lenkung aufweisen, aber auch solche, die sich durch die Abschleppdeichsel auch lenken lassen und die insofern keine eigene Lenkung erfordern. Gerade wenn ein Anhänger mehrachsig ausgebildet sind, kann es erforderlich sein, dass dieser gelenkt werden muss, um dem Zugfahrzeug auch bei einer Kurvenfahrt zu folgen. Dies kennt man so beispielsweise auch von PKWs, die abgeschleppt werden und bei denen der abgeschleppte PWK durch eine Person aktiv gelegt werden muss. Manche Anhänger ermöglichen jedoch auch eine Verbindung der Abschleppdeichsel mit einer Lenkachse des Anhängers, so dass der Anhänger dem Zugfahrzeug auch bei einer Kurvenfahrt selbstständig folgt. Dies kennt man so beispielsweise von einem LKW-Gespann.

Wenngleich sich solche Abschleppdeichseln in der Vergangenheit bewährt haben, es ist zur Entkoppelung des Anhängers von dem Zugfahrzeug in der Regel erforderlich, die Abschleppdeichsel per Hand von dem Zugfahrzeug zu lösen. Dies stellt im zivilen Umfeld meist kein großes Problem dar, bei einem militärischen Einsatz kann ein manuelles Entkoppeln jedoch zu einer erheblichen Gefahr werden. Denn es ist dafür erforderlich, das Gespann anzuhalten, wodurch dieses zu einem einfachen Ziel für feindlichen Beschuss werden kann. Gerade wenn dann in solch einer Gefahrensituationen der Anhänger auch noch manuell vom Zugfahrzeug entkoppelt werden und dafür eine Person das geschützte Innere des Zugfahrzeugs verlassen muss, besteht ein großes Risiko für Leib und Leben.

Die Erfindung stellt sich davon ausgehend die **Aufgabe**, eine Abschleppdeichsel anzugeben, mit welcher der Anhänger in einer Notsituation von dem Zugfahrzeug zuverlässig entkoppelt werden kann.

Diese **Aufgabe** wird bei einer Abschleppdeichsel der eingangs genannten Art dadurch gelöst, dass die Abschleppdeichsel zwei Deichselglieder aufweist, wobei eines der Deichselglieder mit dem Anhänger und das andere Deichselglied mit dem Zugfahrzeug verbindbar ist, wobei ein Verbindungselement vorgesehen ist, welches die beiden Deichselglieder in einer Verbindungsposition miteinander verbindet und welches über eine Sicherungseinrichtung in der Verbindungsposition gesichert ist, wobei das Verbindungselement in eine die Verbindung der beiden Deichselglieder aufhebenden Freigabeposition vorgespannt ist und wobei die Sicherung des Verbindungselements durch eine Betätigung der Sicherungseinrichtung aufhebbar ist, so dass das Verbindungselement zur Notentkopplung des Anhängers von dem Zugfahrzeug aufgrund der Vorspannung selbsttätig in die Freigabeposition überführt wird.

Durch die Möglichkeit, die beiden Deichselglieder in einer Notsituation voneinander zu trennen, ist es zur Entkoppelung des Anhängers von dem Zugfahrzeug nicht erforderlich, die Abschleppdeichsel von dem Zugfahrzeug zu lösen, sondern bei einer Notentkopplung ist das eine Deichselglied weiterhin mit dem Zugfahrzeug und das andere Deichselglied weiterhin mit dem Anhänger verbunden. Durch die Möglichkeit, die Abschleppdeichsel selbst bzw. die beiden Deichselglieder voneinander zu trennen, wird insofern neben dem normalen Abkoppeln des Anhängers, indem die Abschleppdeichsel vom Zugfahrzeug gelöst wird, eine weitere Möglichkeit geschaffen, über die der Anhänger in einer Notsituation zuverlässig vom Zugfahrzeug abgekoppelt werden kann.

Im normalen Betrieb sind die beiden Deichselglieder dabei über ein Verbindungselement miteinander verbunden, so dass eine Kraftübertragung zwischen dem Zugfahrzeug und dem Anhänger besteht und der Anhänger von dem Fahrzeug gezogen oder auch geschoben werden kann. Die Abschleppdeichsel gewährleistet insofern einen Kraftfluss vom Zugfahrzeug über das eine Deichselglied zum Verbindungselement und von dort aus weiter zum anderen Deichselglied und schließlich zum Anhänger oder umgekehrt.

Über die Sicherungseinrichtung wird das Verbindungselement in der die beiden Deichselglieder miteinander verbindenden Verbindungsposition gesichert bzw. gehalten. Die Sicherungseinrichtung sorgt somit für eine zuverlässige Verbindung der beiden Deichselglieder über das Verbindungselement, so dass sich die Deichselglieder im normalen Betrieb nicht unbeabsichtigt voneinander trennen können und der Kraftfluss sichergestellt bleibt. Gleichwohl ist das Verbindungselement jedoch in eine die Verbindung der beiden Deichselglieder aufhebenden Freigabeposition vorgespannt, so dass in einer Notsituation die zur Trennung der beiden Deichselglieder erforderliche Kraft durch die Vorspannung bereits bereitgestellt ist und diese dann nur noch freigegeben werden muss. Die Vorspannung des Verbindungselement gewährleistet insofern, dass die beiden Deichselglieder sehr schnell und ohne großen zusätzlichen Kraftaufwand voneinander getrennt werden können.

Um den Anhänger dann in einer Notsituation vom Zugfahrzeug notzuentkoppeln, ist es nur noch erforderlich, über eine Betätigung der Sicherungseinrichtung die Sicherung des Verbindungselements in der Verbindungsposition aufzuheben. Wenn die Sicherungseinrichtung das Verbindungselement nicht mehr sichert, wird das Verbindungselement durch die Vorspannung im Grunde schlagartig in die Freigabeposition überführt, in der die beiden Deichselglieder nicht mehr über das Verbindungselement miteinander verbunden sind und der Anhänger insofern vom Zugfahrzeug abgekoppelt ist. Wegen der bereits im normalen Betrieb bereitgestellten Vorspannkraft, wird das Verbindungselement bei einer Entsicherung selbsttätig bzw. automatisch in die Freigabeposition überführt.

Es hat sich im Hinblick auf die beiden Deichselglieder als vorteilhaft herausgestellt, wenn eines der Deichselglieder zugfahrzeugseitig und das andere Deichselglied anhängerseitig angeordnet ist. Das zugfahrzeugseitige Deichselglied, nachfolgend auch als erstes Deichselglied bezeichnet, kann Verbindungsmittel zur Verbindung, insbesondere zur lösbaren Verbindung, mit dem Zugfahrzeug aufweisen. Beispielsweise kann das zugfahrzeugseitige Deichselglied eine ringförmige Zugöse aufweisen. Das entsprechende Verbindungsmittel kann derart ausgestaltet sein, dass das Deichselglied mit einer üblichen Zugfahrzeugschnittschnelle zum Ankoppeln eines Anhängers verbindbar ist, wie beispielsweise einer Anhängerkupplung. Das entsprechende Verbindungsmittel kann an der dem anhängerseitigen Deichselglied gegenüberliegenden Ende des zugfahrzeugseitigen Deichselglieds und insofern im zugfahrzeugseitigen Endbereich der Abschleppdeichsel angeordnet sein. Das anhängerseitige Deichselglied wird nachfolgend auch als zweites Deichselglied bezeichnet.

Gemäß einer vorteilhaften Weiterbildung der Erfindung wird vorgeschlagen, dass das Verbindungselement als Verbindungsbolzen ausgestaltet ist. Die Ausgestaltung als Verbindungsbolzen ermöglicht eine zuverlässige Kraftübertragung zwischen den beiden Deichselgliedern in der Verbindungsposition. Wenn das Zugfahrzeug den Anhänger abschleppt, kann das Verbindungselement in erster Linie auf Scherung beansprucht werden. Insofern kann das Verbindungselement in erster Linie auf eine solche Beanspruchung ausgelegt sein Das Verbindungselement kann aus Stahl, insbesondere aus hochlegiertem Stahl, bestehen, um den entsprechenden Anforderungen standhalten zu können.

Im Hinblick auf die Ausrichtung des Verbindungselements hat es sich als vorteilhaft herausgestellt, wenn sich dieses in der Verbindungsposition in vertikaler Richtung erstreckt. Durch diese Ausgestaltung wirkt nicht nur die Vorspannkraft auf das Verbindungselement, sondern auch die Erdanziehungskraft drängt das Verbindungselement in die Freigabeposition, was eine zuverlässige Lösung der beiden Deichselglieder sicherstellen kann. Auch kann durch die vertikale Ausrichtung des Verbindungselements sichergestellt werden, dass dieses auch bei Fahrten über unebenes Gelände die beiden Deichselglieder zuverlässig miteinander verbindet. Denn durch die vertikale Ausrichtung kann das Verbindungselement auch Drehmomente um eine sich parallel zum Boden erstreckende Querachse aufnehmen.

Es hat sich weiterhin als vorteilhaft herausgestellt, wenn das Verbindungselement über ein Sicherungsseil gegen Verlieren gesichert ist. Ein entsprechendes Sicherungsseil kann dafür sorgen, dass das Verbindungselement bei der Überführung in die Freigabeposition nicht verloren geht, sondern auch in der Freigabeposition über das Sicherungsseil weiterhin mit der Abschleppdeichsel verbunden ist. Insofern können, wenn die beiden Deichselglieder voneinander notentkoppelt wurden, diese durch dasselbe Verbindungselement auch wieder miteinander verbunden werden.

Zur Gewährleistung einer zuverlässigen Vorspannkraft hat es sich als vorteilhaft herausgestellt, wenn das Verbindungselement über eine Feder in die Freigabeposition vorgespannt ist. Die Feder kann als Schraubenfeder ausgestaltet sein, und die Vorspannkraft kann derart bemessen sein, dass eine zuverlässige Überführung des Verbindungselements aus der Verbindungsposition in die Freigabeposition im Falle einer Notentkopplung des Anhängers von dem Zugfahrzeug sichergestellt ist. Auch die Verwendung einer Blattfeder ist möglich.

Gerade wenn sich der Anhänger verklemmt oder verhakt hat und das Zugfahrzeug eine Zugkraft auf den Anhänger aufbringt, kann das Verbindungselement zwischen den beiden Deichselgliedern festgeklemmt sein. Wenn dann mitunter auch die Federkraft, ggf. im Zusammenspiel mit der Erdanziehungskraft, nicht groß genug ist, um das Verbindungselement in die Freigabeposition zu überführen, kann es zur Lösung der Verbindung und damit zur Notentkopplung genügen, wenn die Spannung kurzzeitig von der Abschleppdeichsel genommen wird. Dies kann bspw. durch Lastwechsel passieren, also bspw. durch ein Ruckeln bei der Fahrt aufgrund von Bodenunebenheiten. Auch im Stand, wenn die beiden Deichselglieder weitestgehend kraftfrei sind, kann eine Notentkopplung weitestgehend unkritisch möglich sein.

Weiterhin hat sich im Hinblick auf das Verbindungselement als vorteilhaft herausgestellt, wenn die Vorspannkraft der Feder in Längsrichtung des Verbindungselements wirkt. Bei einer Freigabe der Sicherungseinrichtung kann das Verbindungselement durch die in Längsrichtung wirkende Vorspannkraft der Feder in axialer Richtung aus der Verbindungsposition in die Freigabeposition bewegt werden. Das Verbindungselement kann sich im Wesentlichen in axialer Richtung erstrecken, so dass die Vorspannkraft in Richtung der größten geometrischen Ausdehnung des Verbindungselements wirkt. Das Verbindungselement kann dabei in linearer Richtung von der Verbindungsposition in die Freigabeposition überführt werden. Eine derartige Bewegung ist beispielsweise im Gegensatz zu einer Drehbewegung weniger fehleranfällig.

In konstruktiver Hinsicht hat es sich als vorteilhaft herausgestellt, wenn das Verbindungselement als Auflage für die Feder eine in radialer Richtung vorspringende Schulter aufweist. Über die Schulter kann die in Längsrichtung bzw. in Axialrichtung des Verbindungselements wirkende Kraft der Feder in das Verbindungselement eingeleitet werden, so dass sich dieses im Falle einer Notentkopplung zuverlässig in die Freigabeposition bewegt. Wenn die Feder als Schraubenfeder ausgestaltet ist, kann die Feder das Verbindungselement umgeben, so dass das Verbindungselement innerhalb der Feder angeordnet sein kann. Dies sorgt für eine in Umfangsrichtung des Verbindungselements gleichmäßig wirkende Kraftverteilung.

Im Hinblick auf die Anordnung der Feder und der Sicherungseinrichtung hat es sich als vorteilhaft erwiesen, wenn die Feder in einem Endbereich des Verbindungselements angreift und die Sicherungseinrichtung im gegenüberliegenden Endbereich des Verbindungselements. Dies sorgt für einen kompakten Aufbau. Das Verbindungselement ist insbesondere starr und insofern nicht ohne Weiteres verformbar, so dass auch durch die Sicherung des der Feder gegenüberliegenden Endes des Verbindungselements sichergestellt wird, dass dieses aufgrund der Kraft der Feder nicht bewegt wird. Die Feder kann bspw. am unteren Ende des Verbindungselements angreifen und die Sicherungseinrichtung kann das Verbindungselement am oberen Ende sichern. In diesem Zusammenhang hat es ebenfalls als vorteilhaft herausgestellt, wenn sich die Feder und die Sicherungseinrichtung im Hinblick auf die Anordnung des Verbindungselements gegenüberliegen, was sich im Hinblick auf einen kompakten Aufbau ebenfalls als vorteilhaft erwiesen hat.

Es hat sich als vorteilhaft herausgestellt, wenn ein Deichselglied, vorteilhaft zumindest ein Deichselglied, zwischen der Feder und der Sicherungseinrichtung angeordnet ist. Die Feder kann somit auf der einen Seite des Deichselgliedes und das Sicherungselement auf der anderen Seite des Deichselgliedes angeordnet sein. Die Feder kann sich an einem Ende an dem Verbindungselement, insbesondere auf der Schulter des Verbindungselements, abstützen. Am gegenüberliegenden Ende kann sich die Feder an der Außenseite eines Deichselgliedes, insbesondere des ersten Deichselgliedes, abstützen. Die Feder kann zwischen dem Deichselglied, insbesondere zwischen beiden Deichselgliedern, und der Schulter des Verbindungselements angeordnet sein. Weiterhin können auch beide Deichselglieder zwischen der Feder und der Sicherungseinrichtung angeordnet sein, zumindest abschnittsweise. Das Verbindungselement kann sich durch die beiden Deichselglieder hindurch erstrecken und an einem Ende über die Feder vorgespannt und an dem anderen Ende über die Sicherungseinrichtung gesichert sein. Diese Ausgestaltung erlaubt eine zuverlässige Sicherung des Verbindungselements und eine zuverlässige Verbindung der beiden Deichselglieder.

Das insbesondere als Bolzen ausgestaltete Verbindungselement kann einen, insbesondere zylinderförmigen, Schaftabschnitt aufweisen, wobei die Feder an einem Ende des Schaftabschnitts und die Sicherungseinrichtung an dem anderen Ende des Schaftabschnitts angeordnet sein können. Das Sicherungselement kann sich durch das Verbindungselement, insbesondere den Schaftabschnitt, erstrecken. Der Vorsprung kann an einem Ende des Schaftabschnitts angeordnet sein. Das Verbindungselement kann eine Längsachse definieren, bei der es sich um die Symmetrieachse des Schaftabschnitts handeln kann. Die entsprechende Längsachse kann sich durch die Feder erstrecken. Ferner kann sich die Längsachse auch durch das Sicherungselement der Sicherungseinrichtung erstrecken. Insbesondere stimmt die Längsachse des Verbindungselements mit der Längsachse der Feder überein. Das Verbindungselement bzw. der Schaftabschnitt können sich durch die Feder erstrecken bzw. kann die Feder auf dem Verbindungselement bzw. auf dem Schaftabschnitt angeordnet sein. Die Kraft der Feder kann in Längsrichtung des Verbindungselements wirken bzw. kann die Feder derart angeordnet sein, dass die Kraft der Feder in Längsrichtung des Verbindungselements wirkt. Die Feder kann somit keine Drehmomente auf das Verbindungselement ausüben, die ggf. zu einer Verklemmung führen könnten.

In konstruktiver Weiterbildung der Erfindung hat sich im Hinblick auf die beiden Deichselglieder als vorteilhaft herausgestellt, wenn diese ineinander einsteckbar sind. Die beiden Deichselglieder weisen jeweils einen Verbindungsbereich auf und die beiden Verbindungsbereiche können, insbesondere durch ein axiales Ineinanderstecken, miteinander verbunden sein. Eines der Deichselglieder, insbesondere das zweite Deichselglied, kann dabei einen männlichen Verbindungsbereich und das andere Deichselglied, insbesondere das erste Deichselglied, kann einen weiblichen Verbindungsbereich aufweisen, so dass die beiden Deichselglieder entsprechend ineinander eingesteckt werden können.

Ferner hat es sich als vorteilhaft herausgestellt, wenn ein Deichselglied einen rohrförmigen Querschnitt aufweist und das andere Deichselglied in dieses Deichselglied axial einsteckbar ist. Insbesondere weist das erste Deichselglied einen rohrförmigen Querschnitt auf. Der Außendurchmesser des eingesteckten Deichselgliedes kann dem Innendurchmesser des anderen Deichselgliedes entsprechen. Dadurch wird erreicht, dass die beiden Deichselglieder in radialer Richtung nicht gegeneinander bewegbar sind, sondern diese in radialer Richtung vielmehr formschlüssig miteinander verbunden sind. Sofern die beiden Deichselglieder noch nicht über das Verbindungselement miteinander verbunden sind, sind diese in axialer Richtung gegeneinander bewegbar. Diese Bewegbarkeit wird dann erst durch das Verbindungselement unterbunden. Der Verbindungsbereich des Deichselgliedes, insbesondere des zweiten Deichselgliedes, kann nach Art eines Axialvorsprungs ausgestaltet sein, der in den Verbindungsbereich des anderen Deichselgliedes in axialer Richtung einsteckbar ist.

Um die beiden Deichselglieder miteinander zu verbinden, hat es sich als vorteilhaft herausgestellt, wenn diese jeweils eine Aufnahme zur Aufnahme des Verbindungselements aufweisen. Die beiden Deichselglieder können somit über das Verbindungselement formschlüssig miteinander verbunden sein bzw. werden. Dies stellt einen besonders zuverlässigen Kraftfluss zwischen Zugfahrzeug und Anhänger über die Abschleppdeichsel bzw. über die beiden Deichselglieder sicher. Die Aufnahmen können jeweils in einem endseitigen Verbindungsbereich der Deichselglieder angeordnet sein. Die Verbindungsbereiche können jeweils in dem Endbereich des Deichselgliedes angeordnet sein, der dem anderen Deichselglied zugewandt ist. Im Hinblick auf die Verbindungsmittel mit dem Zugfahrzeug bzw. die Zugöse kann insofern der Verbindungsbereich in dem Verbindungsmittel gegenüberliegenden Endbereich angeordnet sein.

Zur Verbindung der beiden Deichselglieder hat es sich weiterhin als vorteilhaft herausgestellt, wenn die Aufnahmen beim Ineinanderstecken der Deichselglieder zur Fluchtung gebracht werden können, so dass das Verbindungselement in der Verbindungsposition die Aufnahmen beider Deichselglieder durchgreifen kann. Das Verbindungselement kann sich insofern durch die beiden Aufnahmen hindurch erstrecken und dadurch eine formschlüssige Verbindung der beiden Deichselglieder sicherstellen. Werden die beiden Deichselglieder über eine in Längsrichtung wirkende Zugkraft auseinandergezogen, wird diese über eines der beiden Deichselglieder auf das dann im Wesentlichen auf Scherung beanspruchte Verbindungselement und von dort auf das andere Deichselglied übertragen.

Im Hinblick auf die Aufnahmen hat es sich als vorteilhaft herausgestellt, wenn diese einen freien Querschnitt aufweisen, der mindestens dem Durchmesser des Verbindungselements entspricht. Diese Ausgestaltung ermöglicht, dass das Verbindungselement auf einfache Weise, insbesondere per Hand, durch die beiden Deichselglieder hindurchgesteckt werden kann. Die Aufnahmen können als Durchgangslöcher ausgestaltet sein, deren Innendurchmesser dem Außendurchmesser des Verbindungselements im Wesentlichen entsprechen können. Dies sorgt auch dafür, dass sich das Verbindungselement beim Einstecken nicht verkantet.

Es hat sich weiterhin als vorteilhaft herausgestellt, wenn die beiden miteinander verbundenen Deichselglieder um eine Längsachse gegeneinander relativ verdrehbar ausgestaltet sind. Durch die Relatiwerdrehbarkeit wird gewährleistet, dass auch der Anhänger gegenüber dem Zugfahrzeug um eine entsprechende Längsachse drehbar ist. Auf normalen Straßen ist eine entsprechende Verdrehung um die Längsachse bzw. eine solche Torsion des Anhängers gegenüber dem Zugfahrzeug in der Regel nicht erforderlich. Diese spielt daher im Grunde nur in unebenem Gelänge mit einer gewissen Querneigung eine Rolle. Durch eine entsprechende Relatiwerdrehbarkeit wird somit verhindert, dass die Abschleppdeichsel durch hohe Torsionskräfte beschädigt wird oder von dem Anhänger hohe Torsionskräfte in das Zugfahrzeug bzw. die Zugfahrzeugschnittstelle eingeleitet werden. Die entsprechende Längsachse kann sich mittig durch die beiden Deichselglieder erstrecken und parallel zum Untergrund angeordnet sein. Ferner kann die Längsachse im Wesentlichen der Fahrtrichtung entsprechen, wenn das Zugfahrzeug geradeaus fährt.

Im Hinblick auf die Relatiwerdrehbarkeit hat es sich weiter als vorteilhaft herausgestellt, wenn eines der beiden Deichselglieder feststehend und das andere Deichselglied gegenüber dem feststehenden Deichselglied relativ verdrehbar ausgestaltet ist. Insofern ist es möglich, dass nur eines der beiden Deichselglieder um die Längsachse drehbar und das andere Deichselglied entsprechend feststehend ausgebildet ist. Vorteilhaft ist das erste Deichselglied feststehend ausgestaltet, da auch die Schnittstelle zum Ankoppeln des Anhängers am Zugfahrzeug keine oder nur eine sehr geringe Drehung um eine Längsachse erlaubt. Das zweite Deichselglied kann zwar gegenüber dem Anhänger um die Längsachse feststehend ausgebildet sein, da sich der Anhänger gerade bei Fahrzeugen in unebenem Gelände mit Quergefälle aber gegenüber dem Zugfahrzeug um die Längsachse verdrehen kann, können sich dann entsprechend auch die beiden Deichselglieder gegeneinander verdrehen. In konstruktiver Hinsicht kann das rohrförmige Deichselglied als Drehlager für das in das rohrförmige Deichselglied eingesteckte Deichselglied fungieren.

Im Hinblick auf die Relatiwerdrehbarkeit hat es sich weiterhin als vorteilhaft herausgestellt, wenn die beiden Deichselglieder in einem vorbestimmten Winkelbereich um die Längsachse relativverdrehbar sind. Durch den vorbestimmten Winkelbereich kann insofern auf der einen Seite sichergestellt werden, dass Torsionskräfte in der Abschleppdeichsel geringgehalten werden, gleichwohl kann jedoch eine ausreichende Stabilität der Kopplung von Anhänger mit Zugfahrzeug erreicht werden, so dass der Anhänger beispielsweise bei einer Fahrt über unebenes Gelände mit Quergefälle nicht umkippen kann. Durch die die Verdrehbarkeit der beiden Deichselglieder wird zudem gewährleistet, dass die Lochleibungskräfte geringgehalten werden, so dass diese eine Überführung des Verbindungselements von der Verbindungsposition in die Freigabeposition nicht hemmen. Es hat sich als vorteilhaft herausgestellt, wenn die beiden Deichselglieder in einem Winkelbereich von ± 15 Grad relativ verdrehbar zueinander sind, das heißt der Anhänger kann sich zusammen mit dem anhängerseitigen Deichselglied aus der Nullstellung um 15 Grad im Uhrzeigersinn und um 15 Grad entgegen dem Uhrzeigersinn um die Längsachse verdrehen. Insgesamt ist somit eine Verdrehung von 30 Grad möglich.

In konstruktiver Hinsicht hat es sich als vorteilhaft herausgestellt, wenn eines der beiden Deichselglieder zur Ermöglichung einer Relativverdrehung zwei einander gegenüberliegende Verjüngungen aufweist. Vorteilhaft weist das zweite Deichselglied im Bereich der Aufnahme entsprechende Verjüngungen auf. Diese können als Einschnitte, Kerben oder Ausfräsungen ausgestaltet sein, insbesondere als V-förmige Einschnitte, Kerben oder Ausfräsungen. Die Verjüngungen könnten in Richtung der Mittelachse des Deichselgliedes hin zulaufen, so dass der freie Querschnitt von der Mitte aus in radialer Richtung nach außen hin zunimmt. Der kleinste freie Querschnitt der entsprechenden Aufnahme des Deichselgliedes kann insofern in der Mitte angeordnet sein, und dieser kann dem Außendurchmesser des Verbindungselements entsprechen. Der Querschnitt des Deichselgliedes kann achsensymmetrisch ausgestaltet sein. Das Verbindungselement kann mit dem fahrzeugseitigen Deichselglied drehfest verbunden sein.

Im Hinblick auf die Verjüngung hat es sich als vorteilhaft herausgestellt, wenn diese zwei Flanken aufweist, die winklig zueinander angeordnet sind. Insbesondere sind die beiden Flanken symmetrisch zueinander angeordnet, so dass eine symmetrische Relativbewegung der beiden Deichselglieder sichergestellt wird. Die beiden Flanken können beispielsweise einen Winkel von 30 Grad miteinander einschließen, so dass eine Relativbewegung von 15 Grad in jede Richtung ermöglicht wird. Vorteilhaft sind die Flanken gerade ausgestaltet.

Gemäß einer konstruktiven Weiterbildung hat es sich als vorteilhaft erwiesen, wenn sich eine Flanke der einen Verjüngung mit einer Flanke der anderen Verjüngung in einem Kontaktpunkt treffen. Dieser Kontaktpunkt kann insofern in der Mitte des Deichselgliedes angeordnet sein und, da jede Verjüngung zwei Flanken aufweisen kann, kann insofern ein linker Kontaktpunkt und ein rechter Drehpunkt vorgesehen sein.

Weiterhin hat es sich im Hinblick auf die Flanken als vorteilhaft herausgestellt, wenn diese als Anschläge ausgestaltet sind, die eine Relatiwerdrehung der beiden Deichselglieder begrenzen. Über die Anschläge kann insofern sichergestellt werden, dass sich die beiden Deichselglieder nur in einem vorbestimmten Winkelbereich relativ zueinander verdrehen lassen. Dies sorgt auf der einen Seite für eine ausreichende Fahrstabilität des Anhängers, zudem wird jedoch sichergestellt, dass in der Abschleppdeichsel auftretende Torsionskräfte in einem überschaubaren Rahmen gehalten werden.

Gemäß einer weiteren vorteilhaften Ausgestaltung wird vorgeschlagen, dass das Verbindungselement zusammen mit einem der Deichselglieder gegenüber dem anderen Deichselglied relativverdrehbar ist. Das Verbindungselement kann insofern mit einem Deichselglied drehgekoppelt sein und sich dann mit diesem zusammen gegenüber dem anderen Deichselglied drehen. Vorteilhaft ist das Verbindungsglied mit dem zweiten Deichselglied drehgekoppelt und dann zusammen mit dem zweiten Deichselglied gegenüber dem ersten Deichselglied um die Längsachse drehbar.

Bei dieser Ausgestaltung hat es sich als vorteilhaft herausgestellt, wenn die Ausnehmung des feststehenden Deichselgliedes nach Art eines Langlochs ausgestaltet ist, welches eine Relativbewegung des Verbindungselements ermöglicht. Das Verbindungselement kann insofern zusammen mit einem der Deichselglieder gedreht werden und dabei kann sich das Verbindungselement in dem Langloch hin- und herbewegen. Die Enden des Langlochs können dann als Anschläge zur Begrenzung einer Relativverdrehung der beiden Deichselglieder fungieren.

Im Hinblick auf die Anordnung der Sicherungseinrichtung hat sich als vorteilhaft herausgestellt, wenn diese auf der Außenseite eines der beiden Deichselglieder angeordnet ist. Durch diese Anordnung kann eine sehr kompakte Bauweise erreicht werden. Gleichzeitig kann die Sicherungseinrichtung von außen gut zugänglich sein, was insofern auch eine einfache Wartung der Sicherungseinrichtung ermöglicht.

Im Hinblick auf die Sicherungseinrichtung hat es sich weiterhin als vorteilhaft herausgestellt, wenn diese ein in einer Sicherungsrichtung zwischen einer Sicherungsstellung und einer Entsicherungsstellung hin- und herbewegbares Sicherungselement aufweist. Das Sicherungselement kann parallel zur Längsachse der Deichselglieder bewegbar sein. Die Bewegung zwischen der Sicherungsstellung und der Entsicherungsstellung kann insofern senkrecht zur Bewegung des Verbindungselements zwischen der Verbindungsposition und der Freigabeposition angeordnet sein. Das Sicherungselement kann auf der Außenseite eines der beiden Deichselglieder, insbesondere auf der Außenseite des ersten Deichselgliedes, hin- und herbewegbar sein. Bei einer Betätigung der Sicherungseinrichtung kann das Sicherungselement aus der Sicherungsstellung in die Entsicherungsstellung überführt werden.

Es hat sich weiterhin als vorteilhaft herausgestellt, wenn die Kraft zur Entsicherung der Sicherungseinrichtung geringer ist als die auf das Verbindungselement wirkende Vorspannkraft. Durch diese Ausgestaltung wird die zur Lösung der beiden Deichselglieder maßgebliche Kraft deutlich reduziert. Denn die zur Überführung des Verbindungselement aus der Verbindungsposition in die Freigabeposition erforderliche Vorspannkraft wurde bei der Verbindung der beiden Deichselglieder über das Verbindungselement bereits bereitgestellt, und es ist dann im Falle einer Notentkopplung nur noch erforderlich, diese Kraft durch die Entsicherung der Sicherungseinrichtung freizugeben. Die zum Austreiben des Verbindungselements erforderliche Vorspannkraft wird insofern in der Feder gespeichert und diese kann dann durch die Entsicherung des Verbindungselements durch die Betätigung der Sicherungseinrichtung derart freigegeben werden, dass das Verbindungselement im Grunde schlagartig aus den Aufnahmen der Deichselglieder herausgezogen und die formschlüssige Verbindung der beiden Deichselglieder aufgehoben wird.

Im Hinblick auf das Sicherungselement hat es sich als vorteilhaft herausgestellt, wenn dieses keilförmig ausgestaltet ist. Die keilförmige Form sorgt dafür, dass zur Entsicherung des Verbindungselements durch die Bewegung des Sicherungselements aus der Sicherungsstellung in die Entsicherungsstellung sichergestellt wird, dass sich das Sicherungselement nicht verhaken oder verkanten kann. Denn schon bei einer entsprechenden Überführung kann sich das Verbindungselement aufgrund der Keilform in gewissem Umfang in Richtung der Freigabeposition bewegen. Durch die Keilform ist insofern das Sicherungselement aufgrund der Vorspannkraft der Feder in Richtung der Entsicherungsstellung vorbelastet, bewegt sich jedoch aufgrund der Reibung zwischen dem Sicherungselement und der Verbindungselement und/oder zwischen dem Sicherungselement und der Außenseite des Deichselgliedes nicht. In der Sicherungsstellung kann das Sicherungselement die Aufnahmen bzw. zumindest die Aufnahme eines Deichselgliedes, insbesondere des ersten Deichselgliedes, zumindest teilweise überdecken.

Es hat sich ferner als vorteilhaft herausgestellt, wenn das Sicherungselement in der Sicherungsstellung eine Bewegung des Verbindungselements in die Freigabeposition blockiert. Das Verbindungselement wird insofern durch das Sicherungselement in der Verbindungsposition gehalten, wodurch eine zuverlässige Verbindung der beiden Deichselglieder sichergestellt wird.

Im Hinblick auf die konstruktive Ausgestaltung des Verbindungselements hat es sich weiterhin als vorteilhaft herausgestellt, wenn dieses eine, insbesondere schlitzförmige, Ausnehmung aufweist, in der das Sicherungselement in der Sicherungsstellung angeordnet ist. Durch diese Ausnehmung kann eine formschlüssige Verbindung zwischen Sicherungselement und Verbindungselement realisiert werden. Die Ausnehmung kann sich durch das komplette Verbindungselement parallel zur Längsachse hindurcherstrecken. Wenn das Sicherungselement in der Ausnehmung angeordnet ist bzw. in diese eingreift, ist eine vertikale Bewegung des Verbindungselements nicht möglich, und dieses insofern in der Verbindungsposition gesichert. Das Sicherungselement kann von plattenförmiger Geometrie sein und hinsichtlich deren Dicke an die Breite der Ausnehmung angepasst sein.

Zur Entsicherung des Verbindungselements hat es sich als vorteilhaft herausgestellt, wenn das Sicherungselement aus der Ausnehmung des Verbindungselements herausziehbar ist. Das Sicherungselement kann dafür in linearer Richtung parallel zur Längsachse bewegt werden und nach dem Verlassen der Ausnehmung kann das Verbindungselement aufgrund der wirkenden Vorspannkraft dann selbstständig aus den Ausnahmen der beiden Deichselglieder in die Entsicherungsstellung bewegt werden. Die Bewegungsrichtungen des Sicherungselements und des Verbindungselement stehen dabei in einem rechten Winkel zueinander.

Im Hinblick auf die Sicherungseinrichtung hat es sich ferner als vorteilhaft herausgestellt, wenn das Sicherungselement in die Sicherungsstellung vorgespannt ist. Das Sicherungselement kann über eine Feder in die Sicherungsstellung vorgespannt sein.

In diesem Zusammenhang hat es sich als vorteilhaft herausgestellt, wenn das Sicherungselement entgegen der Vorspannkraft der Feder in die Entsicherungsstellung bewegbar ist. Die das Sicherungselement in die Sicherungsstellung vorspannende Federkraft kann dafür überwunden und das Sicherungselement in die Entsicherungsstellung gezogen werden. Wird keine Kraft auf das Sicherungselement ausgeübt, bewegt sich dieses aufgrund der Vorspannkraft in Richtung der das Verbindungselement sichernden Sicherungsstellung.

In konstruktiver Hinsicht hat es sich als vorteilhaft herausgestellt, wenn das Sicherungselement über einen Druckzylinder in die Entsicherungsstellung bewegbar, insbesondere druckbar, ist. Ein Druckzylinder ermöglicht eine besonders einfache Bewegung des Sicherungselements. Wenn der Druckzylinder mit Druckluft beaufschlagt wird, kann das Sicherungselement aus der Ausnehmung des Verbindungselements herausgezogen werden, so dass dieses freigegeben wird. Der Druckzylinder kann als Druckluftzylinder ausgestaltet sein. Alternativ kann jedoch auch ein hydraulisch wirkender Zylinder vorgesehen sein, der mit Hydraulikflüssigkeit, insbesondere mit Öl, betätigbar ist.

Im Hinblick auf den Druckzylinder hat es sich weiterhin als vorteilhaft herausgestellt, wenn dieser eine Schnittstelle zum Anschluss an ein, insbesondere zugfahrzeugseitiges, Druckluftnetz oder Hydrauliknetz aufweist. Diese Ausgestaltung ermöglicht eine sehr kompakte Bauform, da die Abschleppdeichsel nicht selbst auf einen Kompressor bzw. eine auf die Bereitstellung durch Druck angewiesen ist. Gerade militärische Fahrzeuge weisen in der Regel ohnehin ein Druckluftnetz und/oder ein Hydrauliknetz auf. Ein entsprechendes Druckluftnetz kann insofern ausreichend Druckluft zur Bewegung des Druckzylinders und damit zur Entsicherung des Verbindungselements bereitstellen. Entsprechendes gilt für ein Hydrauliknetz. Um den Druckzylinder bspw. mit Druckluft zu beaufschlagen, kann aus dem Fahrzeuginnenraum ein Magnetventil geöffnet werden, so dass Druckluft aus einer Druckluftversorgerleitung zum Druckzylinder strömen kann. Die Druckluftversorgerleitung kann dafür dauernd unter Druck stehen.

Es hat sich im Hinblick auf die Entsicherung des Verbindungselements als vorteilhaft herausgestellt, wenn der Druckzylinder fernbedienbar ausgestaltet ist. Der Druckzylinder kann insofern aus sicherer Entfernung, beispielsweise aus dem Inneren des Zugfahrzeugs, betätigt und mit Druckluft oder Hydraulikflüssigkeit beaufschlagt werden. Es ist daher nicht erforderlich, dass Personen das Zugfahrzeug zur Notentkopplung des Anhängers von dem Zugfahrzeug verlassen müssten.

Es hat sich im Hinblick auf das Sicherungselement als vorteilhaft herausgestellt, wenn dieses aufgrund der Vorspannung selbstständig in die Sicherungsstellung zurückkehrt, wenn der Druckzylinder nicht mit Druckluft oder Hydraulikflüssigkeit beaufschlagt wird. Insofern kann das Verbindungselement über die Sicherungseinrichtung nur dann entsichert werden, wenn der Druckzylinder aktiviert wird und mit Druckluft oder mit Hydraulikflüssigkeit beaufschlagt wird. Eine unbeabsichtigte Notentkopplung kann somit verhindert werden.

In einer alternativen Ausgestaltung kann das das Verbindungselement in der Entsicherungsstellung freigebende Sicherungselement der Sicherungseinrichtung auch über eine elektromagnetische, eine mechanische oder eine pyrotechnische Betätigung bewegt werden. Auch auf diese Weise dann das Verbindungselement freigegeben werden und sich dann selbstständig aus der Verbindungsposition in die Freigabeposition bewegen.

Gemäß einer vorteilhaften Weiterbildung der Erfindung ist vorgesehen, dass ein Sicherungssplint eine Bewegung des Sicherungselements aus der Sicherungsstellung in die Entsicherungsstellung blockiert. Der Splint kann an dem dem Druckzylinder gegenüberliegenden Ende des Sicherungselements angeordnet sein, so dass sich der Splint und der Druckzylinder im Hinblick auf das Verbindungselement gegenüberliegen. Durch den Splint kann das Sicherungselement nicht aus dem Verbindungselement bzw. aus der Ausnehmung des Verbindungselements herausgezogen werden, so dass insofern auch eine Entkopplung des Anhängers von dem Zugfahrzeug durch den Splint verhindert wird. Um eine entsprechende Entkopplung zu ermöglichen, muss dann der Splint zunächst, insbesondere per Hand, entfernt werden. Über den Splint kann eine unbeabsichtigte Fehlauslösung der Abschleppdeichsel verhindert werden, beispielsweise wenn der Anhänger auf friedlichem Gebiet gezogen wird und insofern auch ein normales Entkoppeln des Anhängers keine Gefahr darstellt. Vor einem militärischen Einsatz wird der Splint dann jedoch entfernt und die Sicherungseinrichtung insofern scharf geschaltet, so dass die beide Deichselglieder in einer Notsituation und auch während der Fahrt jederzeit voneinander Notentkoppelt werden können.

Gemäß einer konstruktiven Weiterbildung hat es sich als vorteilhaft herausgestellt, wenn eines der Deichselglieder eine Zuggabel aufweist, über die das Deichselglied mit dem Anhänger verbindbar ist. Die Zuggabel kann Teil des zweiten Deichselgliedes sein und über diese kann das entsprechende Deichselglied mit dem Anhänger verbunden sein.

Es hat sich dahingehend als vorteilhaft herausgestellt, wenn die Zuggabel zwei Zugschenkel aufweist, die an einem Ende jeweils ein Zahnsegment aufweisen, über welches die beiden Zugschenkel miteinander bewegungsgekoppelt verbunden sind. Die beiden Zugschenkel können insofern nicht unabhängig voneinander bewegbar sein, sondern eine Bewegung des einen Zugschenkels kann aufgrund der Kopplung der beiden Zahnsegmente automatisch auch zu einer Bewegung des anderen Zugschenkels führen. Diese Ausgestaltung sorgt für eine hohe Stabilität und für eine Kraftübertragung zwischen den beiden Zugschenkeln. Dies ist insbesondere bei der Rückwärtsfahrt oder bei engen Kurven vorteilhaft, da sich die wirkenden Kräfte auf beide Zugschenkel aufteilen können. Ferner verhindern die Zahnsegmente ein Einknicken der Abschleppdeichsel bzw. der Zuggabel im Schubbetrieb, wenn also das Zugfahrzeug den Anhänger anschiebt. Die Zuggabel fungiert somit als starre Kopplung mit dem Anhänger und bietet keinen weiteren Drehpunkt.

Im Hinblick auf die Zuggabel hat es sich weiterhin als vorteilhaft herausgestellt, wenn Zug- und Druckkräfte entlang der Winkelhalbierenden des Gabelwinkels der Zuggabel übertragen werden. Auf diese Weise kann eine zuverlässige Kraftübertragung sichergestellt werden, und das Zugfahrzeug kann den Anhänger sowohl durch eine Zugkraft als auch durch eine Drucckraft bewegen.

Ferner hat es sich als vorteilhaft herausgestellt, wenn die Zugschenkel an den den Zahnsegmenten gegenüberliegenden Enden mit dem Anhänger verbindbar sind. Vorteilhaft ist die Verbindung mit dem Anhänger drehbeweglich, so dass keine Momente zwischen dem Anhänger und den Zugschenkeln übertragen werden können. Der Anhänger kann entsprechende Schnittstellen zur Verbindung mit den Zugschenkeln aufweisen. Da die beiden Zugschenkel aufgrund der Möglichkeit der Bewegung über die Zahnsegmente variierbar sind, kann die Abschleppdeichsel insofern auch an verschiedene Schnittstellen eines Anhängers angepasst werden.

Weiterhin hat es sich im Hinblick auf die Zuggabel als vorteilhaft herausgestellt, wenn diese ein Halteelement aufweist, in welchem die beiden Zugschenkel drehbeweglich gelagert sind. Vorteilhaft sind die beiden Zugschenkel im Bereich der Zahnsegmente drehbeweglich gelagert. Das Halteelement kann zwei Platten umfassen, wobei eine Platte oberhalb der Zahnsegmente und die andere Platte unterhalb der Zahnsegmente angeordnet sein kann, so dass die Zugschenkel zwischen den beiden Platten drehbeweglich gelagert sind. Das Halteelement kann eine dreieckige oder T-förmige Ausgestaltung aufweisen.

Im Hinblick auf das Halteelement hat es sich als vorteilhaft herausgestellt, wenn dieses an der Unterseite mit einem Stützfuß ausgestattet ist. Über den Stützfuß kann verhindert werden, dass das entsprechende Deichselglied bei einer Notentkopplung auf den Boden fällt und insbesondere der endseitige Verbindungsbereich beschädigt wird. Durch die Anordnung an der Unterseite kommt insofern nur der Stützfuß mit dem Boden in Kontakt, der auf eine entsprechende Belastung ausgelegt ist.

Es hat sich weiterhin als vorteilhaft herausgestellt, wenn der Verbindungsbereich des Deichselgliedes mit der Zuggabel in dem den Zugschenkeln gegenüberliegenden Endbereich des Deichselgliedes angeordnet ist. Das entsprechende Deichselglied kann insofern auf der einen Seite über die Zugschenkel mit dem Anhänger und auf der gegenüberliegenden Seite über den Verbindungsbereich mit dem anderen Deichselglied bzw. mit dem Verbindungsbereich des anderen Deichselgliedes verbunden sein.

Im Hinblick auf die eingangs genannte Aufgabe wird ferner ein Anhänger für ein Zugfahrzeug vorgeschlagen, wobei der Anhänger mit einer Abschleppdeichsel ausgestattet ist, die in der vorstehend beschriebenen Weise ausgestaltet ist. Es ergeben sich die vorstehend im Hinblick auf die Abschleppdeichsel bereits beschriebenen Vorteile.

Vorteilhaft ist die Abschleppdeichsel mit einem Rahmen des Anhängers verbunden, so dass über die Deichsel keine Lenkbewegung des Anhängers initiiert wird. Diese einfache Konstruktion ist gerade dann vorteilhaft, wenn der Anhänger als Kettenfahrzeug ausgestaltet ist, da dieser dann nicht zwangsläufig eine eigene Lenkung aufweisen muss, sondern von dem Zugfahrzeug ohne Probleme auch in Kurven bewegt werden kann. Der Anhänger kann sowohl als selbstfahrendes Fahrzeug als auch als Fahrzeug ohne Antrieb ausgestaltet sein. Der Anhänger kann ein militärisches Fahrzeug, insbesondere ein militärisches Kettenfahrzeug, sein.

Ferner wird im Hinblick auf die eingangs genannte Aufgabe ein Fahrzeuggespann mit einem Zugfahrzeug und einem Anhänger vorgeschlagen, wobei der Anhänger über eine Abschleppdeichsel mit dem Zugfahrzeug gekoppelt ist und wobei die Abschleppdeichsel in der vorstehend beschriebenen Weise ausgestaltet ist. Auch dahingehend ergeben sich die im Hinblick auf die Abschleppdeichsel bereits beschriebenen Vorteile.

Das Zugfahrzeug kann eine Schnittstelle zur Verbindung mit der Abschleppdeichsel aufweisen. Dabei kann es sich um eine übliche, insbesondere eine genormte, Schnittstelle handeln, über die ein Anhänger mit dem Zugfahrzeug gekoppelt werden kann. Wenn der Anhänger von dem Zugfahrzeug entkoppelt werden soll, kann die Kopplung zwischen der Abschleppdeichsel und dem Zugfahrzeug gelöst werden. Dies entspricht insofern einem normalen Abkoppeln. Nur in einer Notsituation kann auf die vorstehend beschriebene Notentkopplung der Abschleppdeichsel zurückgegriffen werden, bei der die beiden Deichselglieder voneinander getrennt werden. In der getrennten Stellung ist dann das eine Deichselglied mit dem Anhänger und das andere Deichselglied mit dem Zugfahrzeug verbunden. Wird der Anhänger durch diese Weise vom Zugfahrzeug notentkoppelt, kann das Zugfahrzeug ohne den Anhänger weiterbewegt werden, wobei das zugfahrseitige Deichselglied am Zugfahrzeug verbleibt. Bei dem Zugfahrzeug kann es sich um ein militärisches Fahrzeug, insbesondere ein militärisches Rad- oder Kettenfahrzeug, handeln. Bei dem Anhänger kann es sich um ein Fahrzeug, insbesondere ein militärisches Fahrzeug, entweder mit oder ohne eigenen Antrieb, ein defektes Fahrzeug aber bspw. auch um eine Drohne handeln.

Weitere Einzelheiten und Vorteile der Erfindung sollen nachfolgend anhand der beigefügten Zeichnungen eines Ausführungsbeispiels näher beschrieben werden. Darin zeigen:
- Fig. 1: eine Schnittansicht durch die Abschleppdeichsel mit Blick auf die Verbindung der beiden Deichselglieder;
- Fig. 2: eine geschnittene Seitenansicht der Abschleppdeichsel mit Blick auf die Verbindung der beiden Deichselglieder;
- Fig. 3: eine Ansicht gemäß Fig. 2, wobei das die beiden Deichselglieder verbindende Verbindungselement sich in einer Freigabeposition befindet und die beiden Deichselglieder zur Notentkopplung voneinander gelöst wurde;
- Fig. 4: eine schematische Draufsicht auf die Abschleppdeichsel, wobei sowohl die Verbindung mit dem Anhänger als auch die Verbindung mit dem Zugfahrzeug ersichtlich ist.

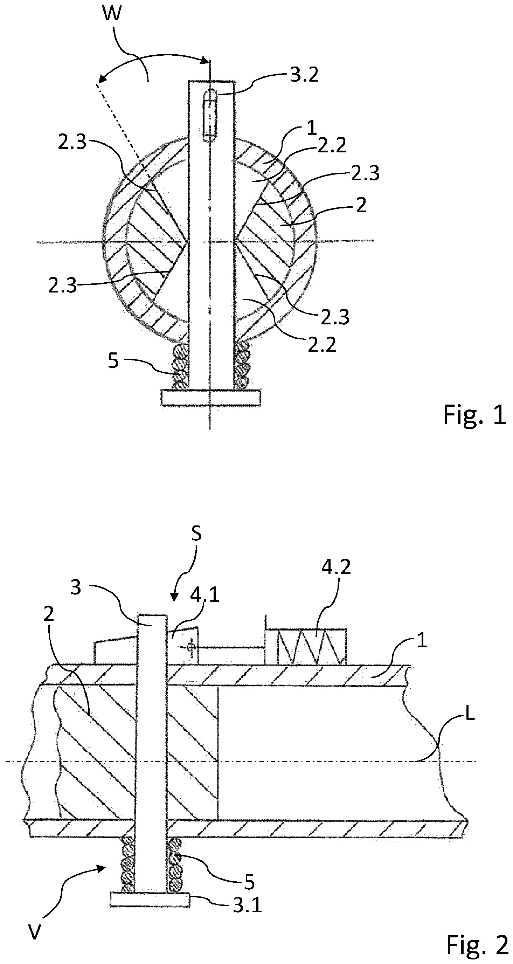

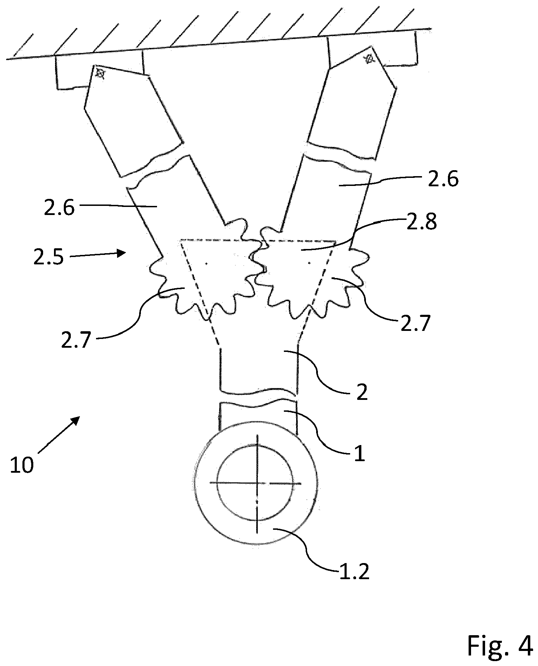

In der Darstellung der Fig. 2 ist eine Abschleppdeichsel 10 in einer geschnitten Seitenansicht dargestellt. Die Abschleppdeichsel 10 ist an einem in der Darstellung nicht dargestellten Anhänger angeordnet und über diese kann der Anhänger an ein den Anhänger ziehendes Zugfahrzeug angekoppelt werden. Um den Anhänger an das Zugfahrzeug anzukoppeln, weist die Abschleppdeichsel 10 an einem Ende eine Zugöse 1.2 auf, die in der Draufsicht der Fig. 4 zu erkennen ist. Diese Zugöse 1.2 kann mit einer handelsüblichen Schnittstelle am Zugfahrzeug verbunden werden, so dass der Anhänger dann an das Zugfahrzeug angekoppelt ist. Zum Entkoppeln kann die Abschleppdeichsel 10 bzw. Zugöse 1.2 wieder vom Zugfahrzeug entkoppelt werden und das Zugfahrzeug dann unabhängig von Anhänger bewegt werden.

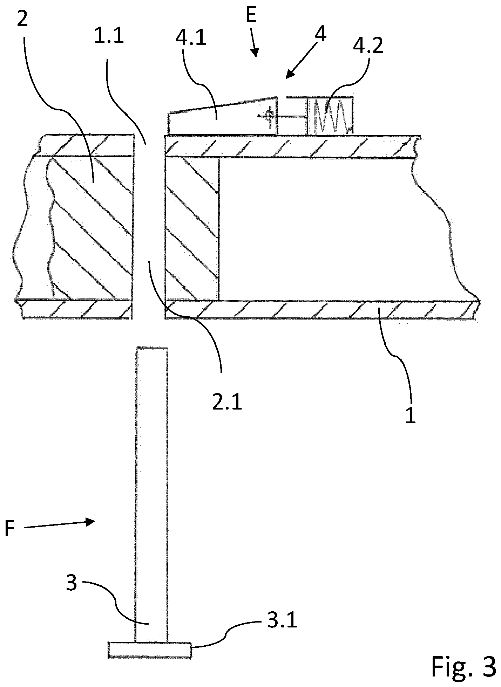

Neben dieser normalen Entkopplung des Anhängers vom Fahrzeug bietet die Abschleppdeichsel 10 zudem die Möglichkeit einer Notentkopplung, über die der Anhänger in einer Notsituation sehr schnell auch während der Fahrt und somit ohne manuelles Eingreifen vom Zugfahrzeug entkoppelt werden kann. Die Notentkopplung basiert darauf, dass die Abschleppdeichsel im Wesentlichen aus drei Elementen besteht, nämlich einem ersten, zugfahrzeugseitigen Deichselglied 1, einem zweiten, anhängerseitigen Deichselglied 2 und einem die beiden Deichselglieder 1, 2 formschlüssig miteinander verbindenden Verbindungselement 3. Im normalen Betrieb sind die beiden Deichselglieder 1, 2 über das Verbindungselement 3 miteinander verbunden, so dass der Anhänger von dem Zugfahrzeug gezogen bzw. abgeschleppt werden kann und ein Kraftfluss zwischen dem Zugfahrzeug und den Anhänger über die Abschleppdeichsel 10 sichergestellt ist. Wenn die Abschleppdeichsel 10 notentkoppelt wird, werden die beiden Deichselglieder 1, 2 in der nachfolgend noch näher beschriebenen Weise voneinander getrennt, so dass das Zugfahrzeug dann unabhängig von dem Anhänger bewegbar ist. Nach der Notentkoppelung ist dann das erste Deichselglied 1 weiterhin mit dem Zugfahrzeug und das zweite Deichselglied 2 weiterhin mit dem Anhänger verbunden, es besteht jedoch keine Verbindung mehr zwischen den beiden Deichselgliedern 1, 2. Diese Notentkopplungsfunktion wird nachfolgend im Hinblick auf die Fig. 2 und 3 noch näher erläutert.

So wie dies in der Darstellung der Fig. 2 zu erkennen ist, weist das erste, zugfahrzeugseitige Deichselglied 1 bzw. dessen Verbindungsbereich einen im Wesentlichen rohrförmigen Querschnitt auf und das zweite, anhängerseitige Deichselglied 2 bzw. dessen Verbindungsbereich ist in das erste Deichselglied 1 in axialer Richtung eingesteckt. Die Querschnittsform des zweiten Deichselgliedes 2 wird nachfolgend im Hinblick auf die Fig. 1 auch noch näher erläutert werden.

Zunächst sind die beiden Deichselglieder 1 in axialer Richtung, also entlang der Längsachse L, gegeneinander bewegbar. Die Längsachse L korrespondiert dabei mit der Mittelachse der beiden Deichselgliedern 1, 2 und diese erstreckt sich in Fahrtrichtung parallel zum Boden. Um die beiden Deichselglieder 1, 2 dann miteinander zu verbinden, wird das als Bolzen ausgestaltete Verbindungselement 3 von unten durch die beiden Deichselglieder 1, 2 hindurchgesteckt und diese somit über das Verbindungselement 3 formschlüssig miteinander verbunden.

Damit das Verbindungselement 3 entsprechend eingesteckt werden kann, weisen beiden Deichselglieder 1, 2 jeweils eine als Bohrung ausgestaltete Aufnahme 1.1, 2.1 auf. Die beiden Aufnahmen 1.2, 2.1 können beim Ineinanderstecken der beiden Deichselglieder 1, 2 zur Fluchtung gebracht werden können, so dass sich im zusammengesteckten Zustand eine durch die beiden Deichselglieder 1, 2 hindurch erstreckende Ausnehmung ergibt. Diese Ausnehmung ist beispielsweise auch in der Fig. 3 gut ersichtlich. Wenn das Verbindungselement 3 nun in diese Ausnehmung 3.2 eingesteckt wird, sind die beiden Deichselglieder 1, 2 über das Verbindungselement 3 zuverlässig miteinander verbunden.

Um die beiden Deichselglieder 1, 2 nun in einer Notsituation voneinander zu trennen, muss das Verbindungselement 3 wieder aus den Aufnahmen 1.1, 1.2 entfernt werden und aus der in der Fig. 2 dargestellten Verbindungsposition V in die in der Fig. 3 dargestellte Freigabeposition F überführt werden.

Das die beiden Deichselglieder 1, 2 miteinander verbindende Verbindungselement 3 ist durch eine Feder 5 in Richtung der Freigabeposition F vorgespannt. Die als Schraubenfeder ausgestaltete Feder 5 ist dabei zwischen einer radial vorspringenden Schulter 3.1 des Verbindungselements 3 und der Außenseite des ersten Deichselgliedes 1 angeordnet. In der Darstellung gemäß Fig. 2 wirkt die Federkraft insofern senkrecht zur Längsachse nach unten und diese will das Verbindungselement 3 aus den Aufnahmen 1.1, 2.1 austreiben.

An dem der Feder 5 gegenüberliegenden Ende des Verbindungselements 3 ist dieses jedoch über eine Sicherungseinrichtung 4 in der Verbindungsposition V gesichert, so dass die Vorspannkraft nicht zu einer Bewegung des Verbindungselements 3 führt. Damit das Verbindungselement 3 von der Feder 5 getrieben selbsttätig in die Freigabeposition überführt wird, muss zunächst die das Verbindungselement 3 sichernde Sicherungseinrichtung 4 betätigt bzw. entsichert werden.

Die Sicherungseinrichtung 4 besteht im Wesentlich aus zwei Elementen, nämlich einem keilförmigen Sicherungselement 4.1 und einem Druckzylinder 4.2, der über eine Stange mit dem Sicherungselement 4.1 verbunden ist. In der Darstellung gemäß Fig. 2 befindet sich die Sicherungseinrichtung 4 in einer Sicherungsstellung S, d. h. das Sicherungselement 4.1 sichert das Verbindungselement 3 gegen eine Bewegung in die Freigabeposition F. Dies stellt insofern den normalen Fahrbetrieb dar, bei dem der Anhänger mit dem Zugfahrzeug gekoppelt ist.

Das Sicherungselement 4.1 ist von plattenförmiger Geometrie und dieses greift in der Sicherungsstellung S in eine schlitzförmige Ausnehmung 3.2 des Verbindungselements 3 bzw. durchdringt das Sicherungselement 4.1 den oberen Teil des Verbindungselements 3 und hindert dieses insofern an einer Bewegung. Auch zwischen dem Sicherungselement 4.1 und dem Verbindungselement 3 besteht insofern eine formschlüssige Verbindung in der Sicherungsstellung S.

Damit sich das Verbindungselement 3 nun von der Feder 5 getrieben und zur Lösung der beiden Deichselglieder 1, 2 voneinander in die Freigabeposition F bewegen kann, muss zunächst das Sicherungselement 4.1 aus der Ausnehmung 3.2 des Verbindungselements 3 hinausgezogen und dadurch die Sicherung des Verbindungselements 3 aufgehoben werden. Um das Sicherungselement 4.1 entsprechend zu bewegen, wird der Druckzylinder 4.2 mit Druckluft beaufschlagt, wodurch dann das Sicherungselement 4.1 aus der Sicherungsstellung S entgegen der Kraft einer Feder in die Entsicherungsstellung E gezogen wird. Das Sicherungselement 4.1 gleitet dabei auf der Außenseite des ersten Deichselgliedes 1 ab, bis dieses die in der Darstellung der Fig. 3 dargestellte Entsicherungsstellung E erreicht hat.

Um eine entsprechende Bewegung zu initiieren, ist der Druckzylinder 4.2 über eine entsprechende Schnittstelle mit einem fahrzeugseitigen Drucknetz verbunden und kann bei Bedarf aus dem Inneren des Zugfahrzeugs über eine Fernbedienung mit Druckluft beaufschlagt werden.

Sobald das Sicherungselement 4.1 aus der Ausnehmung 3.2 des Verbindungselements 3 hinausgezogen ist, ist dieses nicht mehr gesichert. Die Federkraft der Feder 5 kann sich dann entfalten und das Verbindungselement 3 wird im Grunde schlagartig nach unten aus den beiden Aufnahmen 1.1, 2.1 gedrückt und in Richtung der Freigabeposition F beschleunigt. Wenn die Feder 5 das Verbindungselement 3 dann aus den Aufnahmen 1.1, 2.1 der beiden Deichselglieder 1, 2 ausgetrieben hat, sind die beiden Deichselglieder 1, 2 in axialer Richtung zueinander bewegbar und der Kraftfluss zwischen dem Zugfahrzeug und dem Anhänger ist aufgehoben. Die Abschleppdeichsel 10 ist dann in zwei Teile getrennt und der Anhänger von dem Zugfahrzeug notentkoppelt, so dass das Zugfahrzeug unabhängig von dem Anhänger bewegt werden kann.

Die das Verbindungselement 3 vorspannende Feder 5 wird bei der Verbindung der beiden Deichselglieder 1, 2, bzw. beim Einstecken des Verbindungselement 3 in die beiden Aufnahmen 1.1, 2.1, bereits vorgespannt. Die zur Lösung der beiden Deichselglieder 1, 2 erforderliche Kraft, über welche das Verbindungselement 3 in die Freigabeposition P bewegt werden kann, ist somit von Anfang an bereitgestellt und muss dann zur Notentkoppelung des Anhängers nur noch freigegeben werden. Die Kraft zur Bewegung des Sicherungselements aus der Sicherungsstellung S in die Entsicherungsstellung E ist dabei deutlich geringer als die von der Feder 5 auf das Verbindungselement 3 wirkende Vorspannkraft, so dass im Grunde bereits ein kleiner Impuls genügt, um eine zuverlässige Notentkoppelung zu erreichen. Dies wird durch die keilförmige Ausgestaltung des Sicherungselements 4.1 noch unterstützt, da sich das Sicherungselement 4.1 aufgrund der Keilform mit nur wenig Kraft aus der Ausnehmung 3.2 des Verbindungselements 3 ziehen lässt.

Im Hinblick auf die Darstellung der Fig. 1 soll nun der Querschnitt des zweiten Deichselgliedes 2, bspw. der Verbindungsbereich des zweiten Deichselgliedes 2, der mit dem ersten Deichselglied 1 verbunden werden kann, näher erläutert werden. Der Außendurchmesser des zweiten Deichselgliedes 2 entspricht in etwa dem freien Innendurchmesser des ersten Deichselgliedes 1, so dass sich die beiden Deichselglieder 1, 2 nach dem Ineinanderstecken nur geringfügig in radialer Richtung relativ zueinander bewegen können.

Weiterhin ist die Aufnahme 2.1 des zweiten Deichselgliedes 2 derart ausgestaltet, dass sich das zweite Deichselglied 2 auch nach der Verbindung mit dem ersten Deichselglied 1 durch das Verbindungselement 3 in gewissen Grenzen gegenüber dem ersten Deichselglied 1 verdrehen kann. Insofern werden seitliche Kippbewegungen des Anhängers, die bspw. auf unebenem Gelände an einem Schräghang zu befürchten stehen, nicht unmittelbar an das Fahrzeug weitergeben, sondern der Anhänger kann sich vielmehr in gewissen Grenzen zusammen mit dem anhängerseitigen Deichselglied 2 um die Längsachse L hin und her drehen. Durch diese Bewegbarkeit werden Torsionskräfte reduziert bzw. diese werden erst ab einem bestimmten Drehwinkel ans Fahrzeug übertragen.

Um eine entsprechende Relativdrehung der beiden Deichselglieder 1, 2 zu ermöglichen, weist das zweite Deichselglied 2 im Bereich der Aufnahme 2.1 zwei sich im Hinblick auf eine parallel zum Boden angeordnete Horizontalebene gegenüberliegende Verjüngungen 2.2 auf. Diese Verjüngungen 2.2 haben die Form einer Spitzkerbe, die sich bis zur Mitte des Deichselgliedes 2 erstrecken. Die Flanken 2.3 der Verjüngungen 2.2 sind dabei gerade ausgestaltet und weisen einen Winkel von ca. 15 Grad zur senkrechten Mittelachse des Verbindungselements 3 auf. Die beiden Flanken 2.3 einer Verjüngung 2.2 weisen daher in etwa einen Winkel von 30 Grad zueinander auf. Der entsprechende Winkelbereich W ist auch in der Darstellung der Fig. 1 dargestellt.

Die im Bereich einer horizontalen und mittig angeordneten Querachse zusammenlaufenden Flanken 2.3 der gegenüberliegenden Verjüngungen 2.2 bilden dadurch im Berührungspunkt einen Winkel von ca. 150 Grad. Weiterhin fungieren die Flanken 2.3 als Anschläge, die eine Drehbewegung der beiden Deichselglieder 1, 2 zueinander begrenzen. So wie dies anhand der Fig. 1 ersichtlich ist, können die beiden Deichselglieder 1, 2 nur so weit relativ zueinander verdreht werden, bis die Flanken 2.3 mit dem Verbindungselement 3 in Kontakt kommen und eine weitergehende Verdrehung verhindert wird.

Ein weiterer Aspekt der Abschleppdeichsel 10 wird anhand der Fig. 4 ersichtlich. Diese zeigt die Abschleppdeichsel 10 in einer Draufsicht, wobei der mittlere Teil der Abschleppdeichsel 10, in welchem die beiden Deichselglieder 1, 2 miteinander verbunden sind, nicht mit dargestellt ist. Wie dies in der Darstellung der Fig. 4 zu erkennen ist, weist das zweite Deichselglied 2 eine Zuggabel 2.5 auf, über die es mit dem Anhänger verbunden ist. Die Zuggabel 2.5 wiederum besteht im Wesentlichen aus zwei Zugschenkeln 2.6, die auf der einen Seite mit dem Anhänger verbunden sind und die auf der anderen Seite miteinander kämmende Zahnsegmente 2.7 aufweisen. Durch die Zahnsegmente 2.7 ist es insofern nicht möglich, die beiden Zugschenkel 2.6, auch wenn diese von Anhänger gelöst sind, unabhängig voneinander zu bewegen, sondern eine Bewegung des einen Zugschenkels 2.6 führt zwangsläufig zu einer gegenläufigen Bewegung des anderen Zugschenkels 2.6. Wird bspw. der rechte Zugschenkel 2.6 in Richtung der Mitte auf den linken Zugschenkel 2.6 zubewegt, bewegt sich der linke Zugschenkel 2.6 automatisch in entgegengesetzter Richtung in Richtung des rechten Zugschenkels 2.6, bis beide Zugschenkel 2.6 in der Mitte aneinander anliegen. Über die kämmende Verbindung der beiden Zugschenkel 2.6 können Kräfte und auch Drehmomente zwischen den beiden Zugschenkeln 2.6 übertragen werden. Weiterhin sorgt die Zuggabel 2.5 dafür, dass Kräfte möglichst gleichmäßig auf beide Zugschenkel 2.6 aufgeteilt und entlang der Winkelhalbierenden der Zugschenkel 2.6 übertragen werden.

Im Bereich der Zahnsegmente 2.7 sind beide Zugschenkel 2.6 in einem gemeinsamen und im Wesentlichen aus zwei parallel zueinander angeordneten Platten ausgestaltetes Halteelement 2.8 drehbar gelagert, wobei eine Platte oberhalb der Zahnsegmente 2.7 und die andere Platte unterhalb der Zahnsegmente 2.7 angeordnet ist. Über das Halteelement 2.8 können insofern Kräfte zwischen den Zugschenkeln 2.6 auf der einen Seite und dem Verbindungsbereich des Deichselgliedes 2 zur Verbindung mit dem ersten Deichselglied 1 auf der anderen Seite übertragen werden.

### Bezugszeichen:

- 1: Deichselglied
- 1.1: Aufnahme
- 1.2: Zugöse
- 2: Deichselglied
- 2.1: Aufnahme
- 2.2: Verjüngung
- 2.3: Flanke
- 2.5: Zuggabel
- 2.6: Zugschenkel
- 2.7: Zahnsegment
- 2.8: Halteelement
- 3: Verbindungselement
- 3.1: Kopf
- 3.2: Ausnehmung
- 4: Sicherungseinrichtung
- 4.1: Sicherungselement
- 4.2: Druckzylinder
- 5: Feder
- 10: Abschleppdeichsel

- F: Freigabeposition
- V: Verbindungsposition
- S: Sicherungsstellung
- E: Entsicherungsstellung
- L: Längsachse
- W: Winkelbereich

## Patentansprüche

1. Abschleppdeichsel, über welche ein Anhänger an ein Zugfahrzeug ankoppelbar ist, so dass der Anhänger von dem Zugfahrzeug gezogen werden kann,
**gekennzeichnet durch,**
zwei Deichselglieder (1, 2), wobei eines der Deichselglieder (2) mit dem Anhänger und das andere Deichselglied (1) mit dem Zugfahrzeug verbindbar ist, wobei ein Verbindungselement (3) vorgesehen ist, welches die beiden Deichselglieder (1, 2) in einer Verbindungsposition (V) miteinander verbindet und welches über eine Sicherungseinrichtung (4) in der Verbindungsposition (V) gesichert ist, wobei das Verbindungselement (3) in eine die Verbindung der beiden Deichselglieder (1, 2) aufhebenden Freigabeposition (F) vorgespannt ist und wobei die Sicherung des Verbindungselements (3) durch eine Betätigung der Sicherungseinrichtung (4) aufhebbar ist, so dass das Verbindungselement (3) zur Notentkopplung des Anhängers von dem Zugfahrzeug aufgrund der Vorspannung selbsttätig in die Freigabeposition (F) überführt wird.

2. Abschleppdeichsel nach Anspruch 1, **dadurch gekennzeichnet, dass** sich das Verbindungselement (3) in der Verbindungsposition (V) in vertikaler Richtung erstreckt.

3. Abschleppdeichsel nach einem der Ansprüche 1 oder 2, **dadurch gekennzeichnet, dass** das Verbindungselement (3) über eine Feder (5) in die Freigabeposition (F) vorgespannt ist, wobei die Feder (5) in einem Endbereich des Verbindungselements (3) angreift und die Sicherungseinrichtung (4) im gegenüberliegenden Endbereich des Verbindungselements (3).

4. Abschleppdeichsel nach Anspruch 3, **dadurch gekennzeichnet, dass** zumindest ein Deichselglied (1, 2) zwischen der Feder (5) und der Sicherungseinrichtung (4) angeordnet ist.

5. Abschleppdeichsel nach einem der vorhergehenden Ansprüche, **dadurch gekennzeichnet, dass** die beiden Deichselglieder (1, 2) jeweils eine Aufnahme (1.1, 2.1) zur Aufnahme des Verbindungselement (3) aufweisen, wobei die Aufnahmen (1.1, 2.1) beim Ineinanderstecken der Deichselglieder (1, 2) zur Fluchtung gebracht werden können, so dass das Verbindungselement (3) in der Verbindungsposition (V) die beiden Aufnahmen (1.1, 2.1) durchgreifen kann.

6. Abschleppdeichsel nach einem der vorhergehenden Ansprüche, **dadurch gekennzeichnet, dass** die beiden miteinander verbundenen Deichselglieder (1, 2) in einem vorbestimmten Winkelbereich (W) um eine Längsachse (L) gegeneinander relativverdrehbar ausgestaltet sind.

7. Abschleppdeichsel nach Anspruch 6, **dadurch gekennzeichnet, dass** eines der Deichselglieder (1, 2) zur Ermöglichung einer Relatiwerdrehung zwei einander gegenüberliegende Verjüngungen (2.2) aufweist, wobei jede Verjüngung (2.2) zwei Flanken (2.3) aufweist, die winkelig zueinander angeordnet sind und wobei die Flanken (2.3) als Anschläge ausgestaltet sind, die eine Relativverdrehung der beiden Deichselglieder (1, 2) begrenzen.

8. Abschleppdeichsel nach einem der vorhergehenden Ansprüche, **dadurch gekennzeichnet, dass** die Sicherungseinrichtung (4) ein in einer Sicherungsrichtung (S) zwischen einer Sicherungsstellung (S) und einer Entsicherungsstellung (E) hin und her bewegbares Sicherungselement (4.1) aufweist, wobei das Sicherungselement (4.1) in der Sicherungsstellung (S) eine Bewegung des Verbindungselements (3) in die Freigabeposition (F) blockiert.

9. Abschleppdeichsel nach einem der vorhergehenden Ansprüche, **dadurch gekennzeichnet, dass** die Kraft zur Entsicherung der Sicherungseinrichtung (4) geringer ist als die auf das Verbindungselement (3) wirkende Vorspannkraft.

10. Abschleppdeichsel nach einem der vorhergehenden Ansprüche, **dadurch gekennzeichnet, dass** das Verbindungselement (3) eine, insbesondere schlitzförmige, Ausnehmung (3.2) aufweist, in der das Sicherungselement (4.1) in der Sicherungsstellung (S) angeordnet ist, wobei das Sicherungselement (4.1) zur Entsicherung des Verbindungselements (3) aus der Ausnehmung (3.2) herausziehbar ist.

11. Abschleppdeichsel nach einem der vorhergehenden Ansprüche, **dadurch gekennzeichnet, dass** das Sicherungselement (4.1) über einen Druckzylinder (4.2) in die Entsicherungsstellung (E) bewegbar, insbesondere drückbar, ist, wobei der Druckzylinder (4.2) zur Notentkopplung fernbedienbar ausgestaltet ist.

12. Abschleppdeichsel nach einem der vorhergehenden Ansprüche, **dadurch gekennzeichnet, dass** eines der Deichselglieder (1, 2) eine Zuggabel (2.5) aufweist, über die es mit dem Anhänger verbindbar ist, wobei die Zuggabel (2.5) zwei Zugschenkel (2.6) aufweist, die an einem Ende jeweils ein Zahnsegment (2.7) aufweisen, über welches die beiden Zugschenkel (2.6) miteinander bewegungsgekoppelt verbunden sind.

13. Abschleppdeichsel nach Anspruch 12, **dadurch gekennzeichnet, dass** die Zugschenkel (2.6) an dem den Zahnsegmenten (2.7) gegenüberliegenden Enden mit dem Anhänger verbindbar sind.

14. Anhänger für ein Zugfahrzeug mit einer Abschleppdeichsel (10) nach einem der vorhergehenden Ansprüche.

15. Fahrzeuggespann mit einem Zugfahrzeug und einem Anhänger, wobei der Anhänger über eine Abschleppdeichsel (10) lösbar mit dem Zugfahrzeug gekoppelt ist und wobei die Abschleppdeichsel (10) nach einem der Ansprüche 1 bis 13 ausgestaltet ist.
